# EUROPEAN PATENT SPECIFICATION

(11) **EP 1 743 432 B1**
(45) Date of publication and mention of the grant of the patent: **18.03.2009**
(21) Application number: 04810967.2
(22) Date of filing: 12.11.2004
(51) Int. Cl.: H04B 1/18, H01Q 1/24

(54) **IMPEDANCE MATCHING CIRCUIT FOR A MOBILE COMMUNICATION DEVICE**
IMPEDANZANPASSSCHALTUNG FÜR EIN MOBILKOMMUNIKATIONSGERÄT
CIRCUIT D'ADAPTATION D'IMPEDANCE POUR DISPOSITIF DE COMMUNICATION MOBILE

(30) Priority: 03.05.2004 US 837829
(43) Date of publication of application: 17.01.2007
(73) Proprietor: Sony Ericsson Mobile Communications AB, 221 83 Lund (SE)
(72) Inventor: VANCE, Scott, L., 24593 Staffanstorp (SE)
(74) Representative: HOFFMANN EITLE
(86) International application number: PCT/US2004/038029
(87) International publication number: WO 2005/112280

(56) References cited:
- EP-A1- 1 248 317
- GB-A- 2 387 504
- US-A- 5 995 054
- US-A1- 2002 021 278
- PATENT ABSTRACTS OF JAPAN vol. 2000, no. 25, 12 April 2001 (2001-04-12) & JP 2001 217624 A (DENSO CORP), 10 August 2001 (2001-08-10)
- PATENT ABSTRACTS OF JAPAN vol. 2000, no. 25, 12 April 2001 (2001-04-12) & JP 2001 223605 A (KENWOOD CORP), 17 August 2001 (2001-08-17)

## Description

### BACKGROUND OF THE INVENTION

With the ever-decreasing size of mobile terminals, the need for small and low profile antennas capable of operating at mobile frequencies is constantly growing. Internal antennas, such as microstrip antennas and planar inverted F antennas (PIFAs), are now frequently used in many mobile communication devices in place of more conventional external antennas, such as stub antennas and whip antennas. Internal antennas are typically placed inside the housing adjacent an upper end of the housing. Because users typically grasp the lower portion of the housing when using a mobile communication device, placement of the antenna near the upper end of the housing prevents the antenna from being obstructed by the user's hands. As the size of mobile communication devices decreases, however, the user's hand covers a relatively large portion of the housing, making it increasingly more difficult to place the internal antennas to avoid at least partial obstruction by the user's hand.

From patent abstracts of Japan volume 2000, no. 25, 12 April 2001 and JP 2001 217624 A a control circuit is known that switches a matching circuit upon detection that a housing is being gripped by a user's hand. In this document it is detected whether or not the hand is present at all. This function is performed with a single sensor.

From EP-A1-1 248 317 an electrically tuneable antenna device is known. According to this document, a control block, coupled to the antenna with a directional coupler, can be configured to respond to the presence of a user's hand by adjusting the tuning of the antenna. The control block infers the presence of a hand by measuring changes in the impedance.

From US 5,995,045 a single proximity detector is known. In this document, the selection between one antenna connection and another is emphasized, stating that one terminal pair is appropriate when the antenna is distant from the user, and the other terminal pair is appropriate when the antenna is close to the user. This document discloses yet another "all or nothing" presence detector.

From Patent Abstracts of Japan, vol. 2000, no. 25, 12 April 2001 and JP 2001 223605 A a touch sensor is placed around a speaker hole to sense that a mobile device has been placed against a user's ear. Also this document discloses detecting the presence of a user's hand. It adds the detection of the user's ear.

The present invention is defined in claims 1, 10, 19, 28, 37, 45. Advantageous embodiments of the present invention are defined in the dependent claims.

### SUMMARY OF THE INVENTION

The present invention provides a method and apparatus to compensate for changes in antenna impedance caused by the placement of the user's hands on the housing in close proximity to the antenna. The invention is particularly useful in mobile communication devices having an internal antenna. Position sensors detect the position of the user's hand on the housing. The output signals from the sensors are used by the controller to adjust the source impedance of the transmitter and/or receiver based on the position of the user's hand to match the antenna impedance. In one exemplary embodiment, a configurable impedance matching circuit couples the transmitter and/or receiver to the antenna. The impedance matching circuit comprises one or more reactive elements, such as shunt capacitors and inductors, that are reconfigured responsive to control signals from the controller to vary the source impedance of the transmitter and/or receiver. In an alternate embodiment, the controller selectively switches between multiple antenna feed configurations based on the user's hand position to vary the impedance of the antenna.

### BRIEF DESCRIPTION OF THE DRAWINGS

Figure 1A is a functional block diagram of a mobile communication device in accordance with a first embodiment of the present invention.
Figure 1B is a functional block diagram of a mobile communication device in accordance with a second embodiment of the present invention.
Figure 2 is a front view of an exemplary mobile communicating device.
Figure 3 is a back view of an exemplary mobile communicating device.
Fig. 4 is a plan view illustrating an exemplary planar antenna for the mobile communication device.
Figure 5 is a side view illustrating an exemplary planar antenna for the mobile communication device.
Fig. 6 is an exploded perspective view of the mobile communication device showing the antenna arrangement.
Fig. 7 is a schematic diagram illustrating the position of a film-type capacitive sensor relative to the radiating element of an antenna in one exemplary embodiment.
Fig. 8 is a schematic diagram illustrating the position of discrete resistive pressure sensors relative to the radiating element of an antenna in a second exemplary embodiment.
Fig. 9 is a flow diagram illustrating the logic of the controller used to adjust the source impedance of the transmitter.
Fig. 10 is a schematic illustration of a look-up table used to determine configuration settings for an impedance matching network.
Fig. 11 is a schematic diagram of an antenna having a variable feed configuration for an alternate embodiment of the invention.

### DETAILED DESCRIPTION OF THE INVENTION

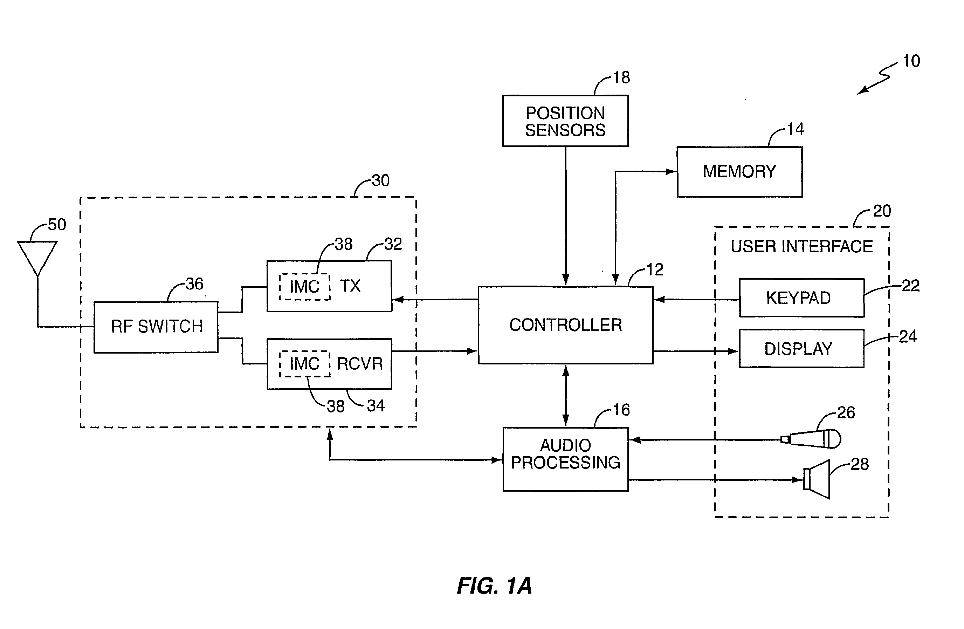

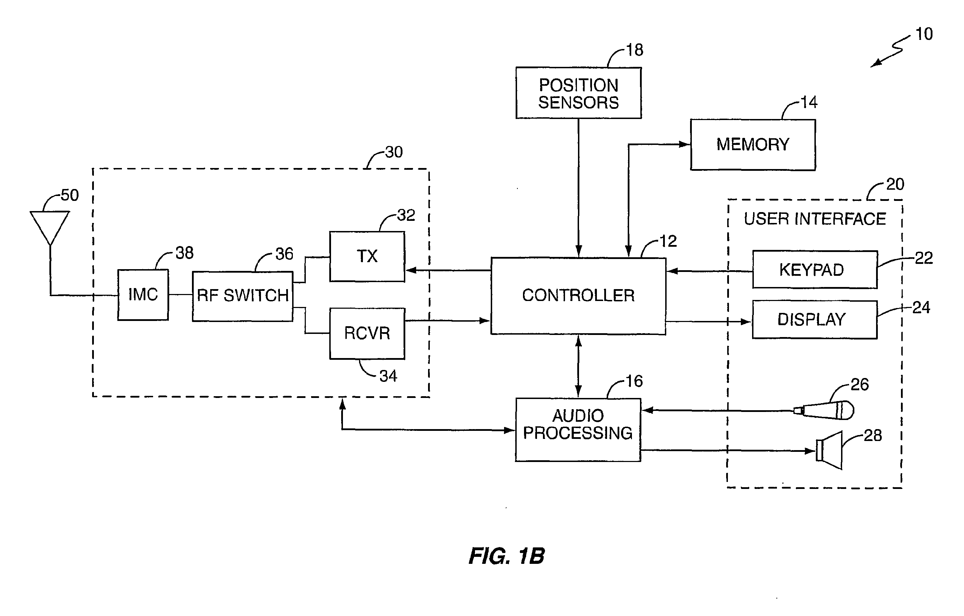

Figs. 1A and 1B are block diagrams of an exemplary mobile communication device 10 according to the present invention. The exemplary embodiments comprise a cellular telephone; however, those skilled in the art will recognize that the present invention may be used in a variety of mobile communication devices 10 including personal digital assistants (PDA), palm computers, and other pervasive computing devices that communicate wirelessly.

Mobile communication device 10 comprises controller 12, memory 14, audio processing circuit 16, position sensors 18, user interface 20, transceiver 30, and antenna 50. Controller 12 controls the operation of mobile communication device 10 according to programs stored in memory 14. The controller 12 may comprise, for example, one or more microprocessors, hardware, firmware, or a combination thereof. Suitable microprocessors may include, for example, both general purpose and special purpose microprocessors and digital signal processors. Memory 14 represents the entire hierarchy of memory in a mobile communication device 10, and may include both random access memory (RAM) and read-only memory (ROM). Computer program instructions and data required for operation are stored in nonvolatile memory, such as EPROM, EEPROM, and/or flash memory, which may be implemented as discrete devices, stacked devices, or integrated with controller 12.

One or more position sensors 18 are used to detect the position of the user's hands and/or fingers when holding the mobile communication device 10. As will be described in more detail below, controller 12 uses the detected hand position to adjust the source impedance of the transmitter 32 based on the position of the user's hands.

User interface 20 includes a keypad 22 and/or other input device, display 24, microphone 26, and speaker 28. Keypad 22 and display 24 enable the user to interact with the mobile communication device 10. Keypad 22 allows the user to dial numbers, enter commands, and navigate menus presented on display 24 to select desired options. Display 24 allows the user to see dialed numbers, status information, prompts, menus, and other information. Display 24 also allows the user to view and read messages and to view images and graphics. Microphone 26 converts the user's speech into electrical audio signals for transmission by the transceiver 30, and speaker 28 converts audio signals received by the transceiver 30 into audible signals that can be heard by the user. Audio processing circuit 16 provides basic analog output signals to speaker 28 and accepts analog audio input signals from microphone 26.

Transceiver 30 is coupled to antenna 50 for receiving and transmitting signals. Transceiver 30 is a fully functional cellular radio transceiver, which may operate according to any known standard, including the standards known generally as the Global System for Mobile Communications (GSM), TIA/EIA-136, cdmaOne, cdma2000, UMTS, and Wideband CDMA. Transceiver 30 includes a transmitter 32 and a receiver 34 coupled to the antenna 50 through an RF switching circuit 36. Electrical signals from transmitter 32 are applied to antenna 50, which converts the electrical signals into electromagnetic waves that radiate out from the antenna 50. Conversely, when antenna 50 is subjected to electromagnetic waves radiating through space, the electromagnetic waves are converted by the antenna 50 into an electrical signal that is applied to the receiver 34. In a preferred embodiment of the invention, transmitter 32 and/or the receiver 34 include an adaptive impedance matching circuit 38 to match the source impedance of the transmitter 32 to the antenna impedance, as will be described in greater detail below. Alternatively, the adaptive matching may be positioned between the RF switch 36 and the antenna 50.

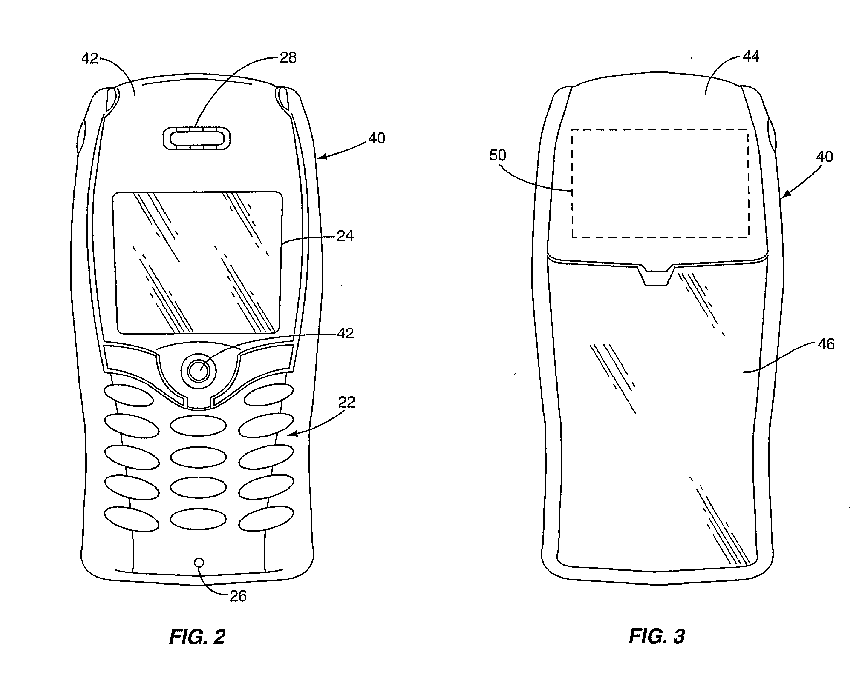

Figs. 2 and 3 illustrate the physical appearance of a typical mobile communication device 10. The mobile communication device 10 includes a housing 40 having a front 42 and a back 44. The keypad 22, display 24, microphone 26 and speaker 28 are disposed on the front 42 of housing 40. A removable battery pack 46 is disposed on the back 44 of housing 40. The internal antenna 50 is located on the backside above the battery pack 46 to radiate electromagnetic energy away from the user.

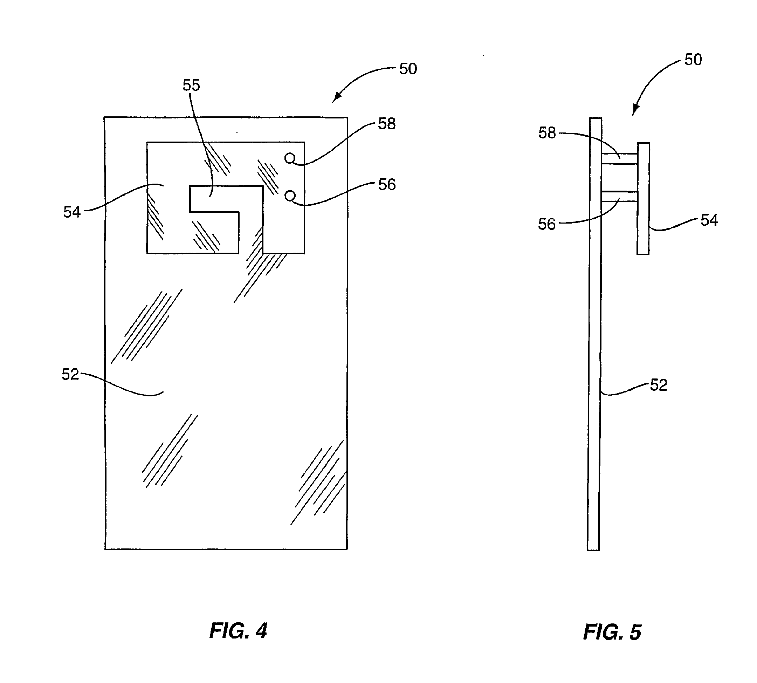

Internal antenna 50 may be a planar antenna, such as a microstrip antenna, patch antenna, monopole antenna, or inverted F antenna. Figs. 4 and 5 illustrate an exemplary planar inverted F antenna (PIFA) 50 for use with the present invention. A PIFA is generally a quarter wavelength resonant antenna achieved by short-circuiting the radiating element to the ground plane using a shorting conductor. The PIFA 50 shown in Figs. 4 and 5 includes a planar radiating element 54, an antenna feed 56, a conductive shorting member 58, and a ground plane 52 with air as a dielectric. In most mobile terminals, the printed circuit board functions as the ground plane 52. Antenna feed 56 is typically a metal strip or conductive member connecting the radiating element 54 to a fixed impedance feed line located on the PCB. The geometry of the feed structure plays an important role in tuning the impedance of the antenna 50. Conductive shorting member 58 conductively couples the radiating element 54 with the ground plane 52. PIFA 50 can be made to operate in multiple frequency bands by using a branched design or by adding grounded or floating parasitic elements. Fig. 4 shows a typical branched PIFA 50 with a single feed and an L-shaped slot 55, which is suitable for operation in the 800 MHz and 1900 Mhz or the 900 MHz and 1800 MHz bands.

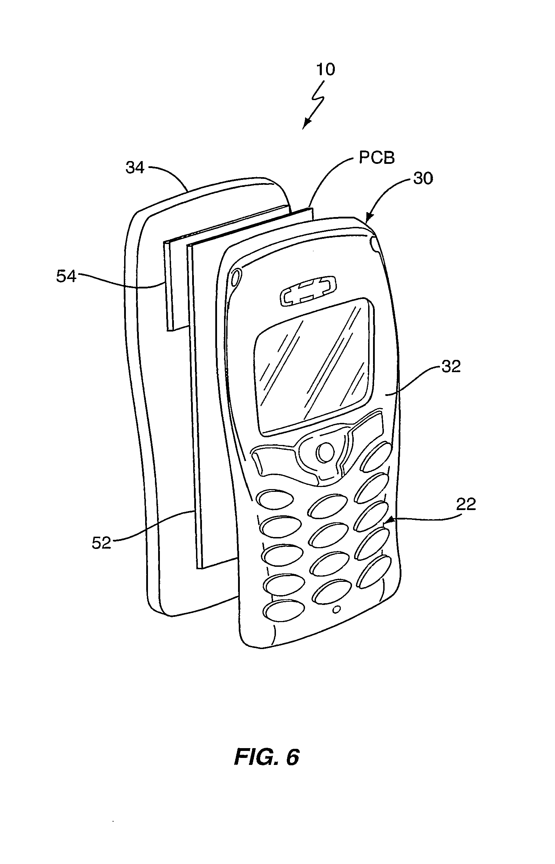

Fig. 6 illustrates a typical arrangement for placing PIFA 50 in a mobile communication device 10. A user will typically grasp the lower portions of housing 40 when using the mobile communication device 10. Consequently, internal antenna 50 is preferably placed adjacent an upper end of the backside 44 of housing 40 to avoid obstruction by the user's hand. However, as mobile communication devices 10 become smaller, the user's hand covers a relatively large portion of the housing 40, making it more difficult to avoid obstruction of the antenna 50. When a portion of the user's hand covers or is in close proximity to the internal antenna 50, some of the energy radiated by internal antenna 50 is absorbed by human tissue, resulting in a loss of radiation efficiency. Additionally, the presence of a human hand in close proximity to internal antenna 50 changes the impedance of internal antenna 50. If not corrected, the impedance mismatch results in further degradation of antenna performance, which can be substantial.

The present invention compensates for changes in antenna impedance caused by the position of the user's hand on the back 44 of housing 40. According to the present invention, position sensors 18 disposed on a back 44 of housing 40 of mobile communication device 10 detect the position of the user's hand, which for purposes of this application includes the user's fingers. Controller 12 uses the output signals from the sensor 18 to adjust the source impedance of the transmitter 32 and/or the receiver 34 based on the position of the user's hand. More particularly, the impedance matching circuit 38 varies the source impedance of the transmitter 32. The impedance matching circuit 38 comprises one or more reactive elements, such as shunt or series capacitors and/or inductors that can be reconfigured responsive to control signals from the controller 12 to vary the source impedance of the transmitter 32. As is known to those skilled in the art, the impedance matching circuit may contain multiple elements in T, Π, or other configurations. The impedance matching circuit 38 includes one or more RF switches which may include MEMS, pin diodes, Gallium Arcsine switches (GAS) or other switches for switching the various capacitors and inductors into and out of the transmission path responsive to a control signal from controller 12.

A variety of position sensors 18 may be used to detect the position of the user's hands, including capacitive sensors, light sensors, and resistive sensors. Preferred embodiments of the invention use film-type capacitive sensors that detect the variation in capacitance caused by the placement of the user's hands or fingers on the back 44 of housing 40. Film-type capacitive sensors can produce three-dimensional curved forms that conform to the housing geometry without losing its sensing function. One example of film-type capacitive sensors suitable for use with the present invention is marketed under the trade name GLIDEPOINT and is sold by ALPS Electric Company, Ltd. of Japan. Film-type capacitive sensors typically comprise two sets of orthogonal electrode arrays separated by a dielectric layer 106. The capacitively coupled electrode arrays form a grid with multiple sensing points that detect variations in capacitance caused by the proximity of the user's hand.

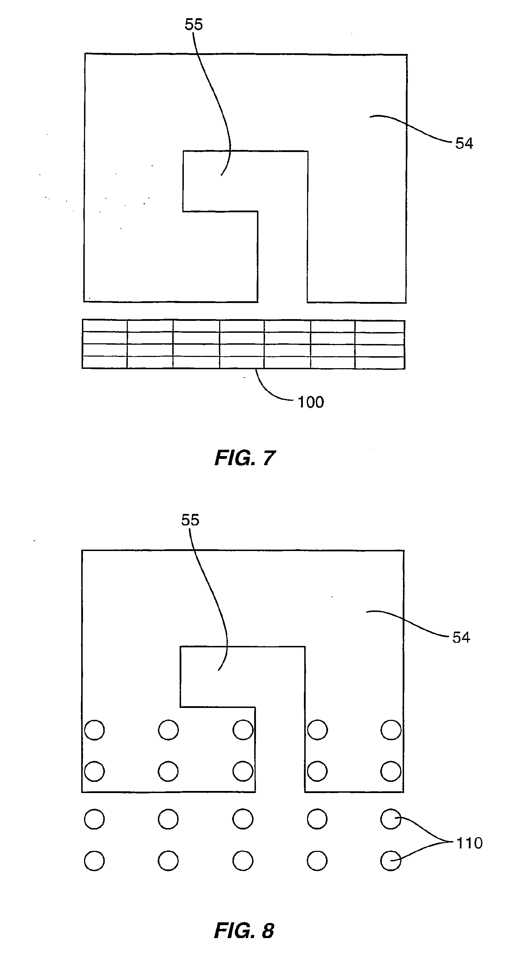

Fig. 7 illustrates one possible arrangement of a film-type capacitive sensor 100 relative to the radiating element 54 of antenna 50. As shown in Fig. 7, the capacitive sensor 100 extends along a side of the radiating element 54 adjacent the opening of the meandering slot 55, and may comprise a sensor with approximately 15 to 18 sensing points. The capacitive grid is disposed slightly below the antenna 50 to avoid capacitive coupling between sensor 100 and radiating element 54. In the position shown in Fig. 7, capacitive sensor 100 detects when the user's hand or finger approaches the ends of the radiating element 54, which would have the effect of changing the antenna impedance by lengthening the antenna 50. In one embodiment, capacitive sensor 100 may be placed on battery pack 46. If the capacitive sensor 100 is disposed on the battery pack 46, it can be electrically coupled to PCB 52 by spring contacts or other flexible or rigid connectors in a conventional manner. Alternatively, battery pack 46 may be constructed to fit into a slot in the bottom or side of the housing 40. In this case, capacitive sensor 100 may be applied directly to the back 44 of housing 40.

Fig. 8 shows an alternate embodiment of the invention using discrete resistive pressure sensors (or optical sensors) 110 as position sensors 18. The resistive pressure sensors 110 can be constructed using high resistivity materials that do not substantially interfere with the antenna 50 and therefore can be placed directly above the antenna 50. In the embodiment shown in Fig. 8, the resistive pressure sensors 110 cover the area adjacent the ends of the radiating element 54, but could cover the entire area of the radiating element 54 if desired.

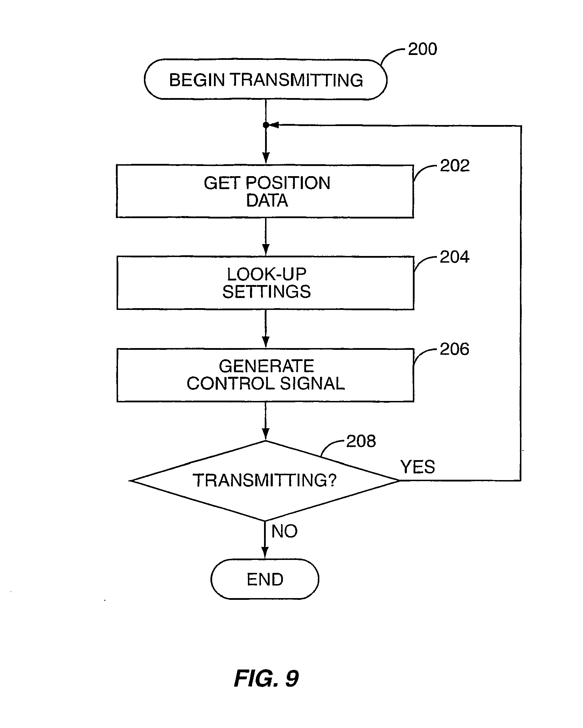

Fig. 9 illustrates the operation of the controller 12. When mobile communication device 10 begins transmitting or receiving (block 200), controller 12 obtains position information from the position sensor(s) 18 (block 202). In a preferred embodiment of the invention, the position sensor(s) 18 are powered only when mobile communication device 10 is transmitting or receiving to conserve battery power. In the simplest embodiment of the invention, controller 12 determines the state of each sensor or sensing point and adjusts the impedance of transmitter 32 based on the detected states (block 204, 206). The state of all of the sensors 18 or sensing points in a film type sensor corresponds to an n-bit codeword wherein each bit corresponds to one sensor or sensing position. A "0" at a given bit position in the codeword may, for example, indicate that the hand is not detected at the corresponding position on the housing 40, and a "1" at the given bit position may indicate that the hand is detected at the corresponding position on the housing 40.

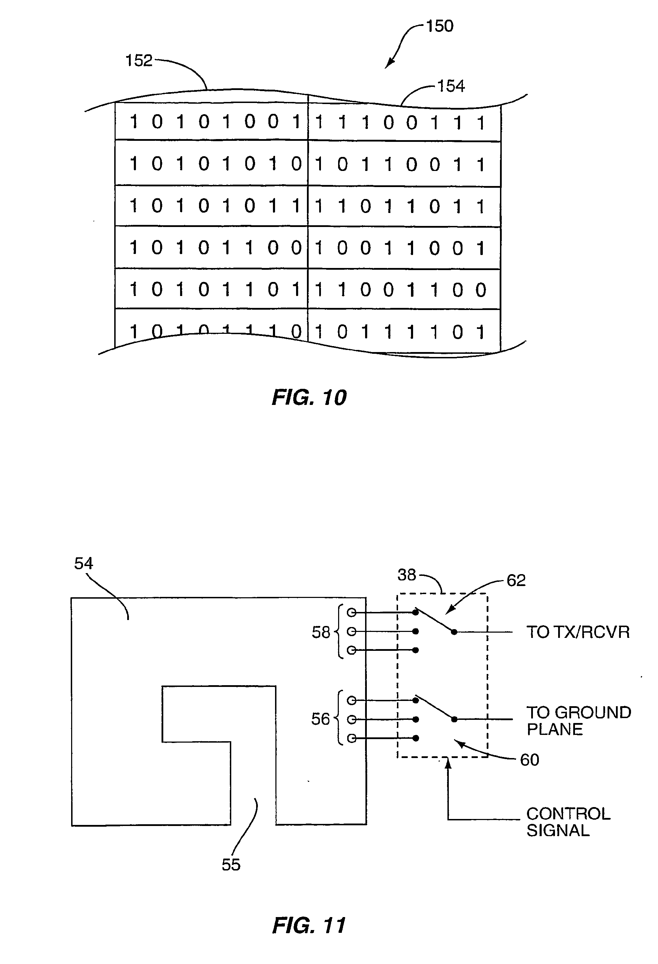

In one embodiment of the invention, settings for the impedance matching circuit 38 correlated with each possible codeword are stored in a look-up table in memory 14. The settings stored in the look-up table may, for example, comprise an m-bit codeword representing a particular configuration for the impedance matching circuit 38. For example, each bit in the m-bit codeword may correspond to a particular switch in the impedance matching circuit 38 and indicate the desired switch position. Fig. 10 illustrates an exemplary lookup table 150. The first column 152 of the lookup table 150 contains the all possible combinations of the sensor states, and the second column 154 contains corresponding settings. Controller 12 determines the appropriate settings for the impedance matching circuit 38 from the look-up table 150 and outputs one or more control signals to reconfigure the impedance matching circuit 38 (block 206). The mobile communication device 10 periodically determines the transmission/reception status (block 208) and repeats steps 202- 206 until mobile communication device 10 stops transmitting. The procedure terminates when mobile communication device 10 stops transmitting/receiving.

In an alternate embodiment of the invention illustrated in Fig. 11, the controller 12 may switch between multiple antenna feeds 56 and/or multiple shorting elements 58 to match the impedance of the antenna 50 with the transmitter and/or receiver. In this embodiment, the impedance matching circuit 38 is placed between the RF switch 36 and the antenna 50 as shown in Fig. 1B. The impedance matching circuit comprises switching circuits 60 and 62 that select the ground element 58 and antenna feed 56 respectively. The impedance matching circuit 38 in this alternate embodiment may further include discrete components, such as shunt capacitors. In some embodiments, it may be possible to perform impedance matching without discrete components. The controller 12 selects an antenna feed configuration based on the position of the user's hand. Selection of the antenna feed configuration can be performed in the manner described above by using a lookup table correlating antenna feed configurations with sensor states.

The present invention may, of course, be carried out in other specific ways than those herein set forth without departing from the scope and essential characteristics of the invention. The present embodiments are, therefore, to be considered in all respects as illustrative and not restrictive, and all changes coming within the meaning of the appended claims are intended to be embraced therein.

## Claims

1. A method of adjusting the source impedance of a transmitter (32) and/or receiver (34) in a mobile communication device (10) including a housing (40) and an internal antenna (50) placed adjacent an upper end of the backside (44) of the housing (40), comprising:
detecting a position, using a plurality of position sensors (18) disposed on the backside (44) of the housing (40), of a user's hand on the mobile communication device (10), the plurality of position sensors (18) forming an array of position sensors (18); and
dynamically adjusting the source impedance of at least one of the transmitter (32) and receiver (34) in the mobile communication device (10) based on the user's hand position,
wherein the plurality of position sensors (18) include at least one capacitive sensor (100) being a film-type capacitive sensor (100) and forming a capacity grid, disposed below the internal antenna (50).

2. The method of claim 1, wherein dynamically adjusting the source impedance of the transmitter (32) in the mobile communication device (10) based on the user's hand position comprises determining a circuit configuration for an impedance matching circuit (38) based on said detected hand position, and generating a control signal to reconfigure the impedance matching circuit (38) based on the determined circuit configuration.

3. The method of claim 2, further comprising storing configuration settings corresponding to a plurality of circuit configurations in a look-up table in memory (14).

4. The method of claim 3, wherein determining a circuit configuration for an impedance matching circuit (38) based on said detected hand position comprises using said detected hand position to select a circuit configuration.

5. A circuit for adjusting the source impedance of at least one of a transmitter (32) and receiver (34) in a mobile communication device (10) including a housing (40) and an internal antenna (50) placed adjacent an upper end of the backside (44) of the housing (40), comprising:
a plurality of position sensors (18), configured to be disposed on the backside (44) of the housing (40), to detect a position of a user's hand on said mobile communication device (10), the plurality of position sensors (18) forming an array of position sensors (18); and
a controller (12) to dynamically adjust the source impedance of at least one of said transmitter (32) and receiver (34) based on the user's hand position,
wherein the plurality of position sensors (18) include at least one capacitive sensor (100) being a film-type capacitive sensor (100) and forming a capacity grid, disposed below the internal antenna (50).

6. The circuit of claim 5, further comprising an impedance matching circuit (38) coupling at least one of said transmitter (32) and receiver (34) to a transmit antenna (50), said impedance matching circuit (38) having one or more reactive elements that can be reconfigured to vary the source impedance of the transmitter (32) and/or receiver (34).

7. The circuit of claim 6, wherein a control signal output by said controller (12) is arranged to reconfigure the impedance matching circuit (38) to vary the source impedance of the transmitter (32) and/or receiver (34).

8. The circuit of claim 7, further comprising a look-up table stored in memory (14) to store a plurality of circuit configurations, wherein the controller (12) is operative to select a circuit configuration from said look-up table based on said detected hand position.

9. A mobile communication device (10) comprising:
a housing (40);
a transmitter (32) and a receiver (34) within said housing (40);
an internal antenna (50) within said housing (40) coupled to said transmitter (32) and said receiver (34), the internal antenna (50) being placed adjacent an upper end of the backside (44) of the housing (40); and
a circuit according to any one of claims 5 to 8, with its plurality of position sensors (18) being disposed on the backside (44) of the housing (40) to detect a position of a user's hand on said housing (40).

10. A method of adjusting the antenna impedance of a mobile communication device (10), including a housing (40) and an internal antenna (50) placed adjacent an upper end of the backside (44) of the housing (40), comprising:
detecting a position, using a plurality of position sensors (18) disposed on the backside of the housing, of a user's hand on the mobile communication device (10), the plurality of position sensors (18) forming an array of position sensors (18); and
dynamically adjusting the impedance of an antenna (50) for the mobile communication device (10) by selectively switching between multiple antenna feed configurations,
wherein the plurality of position sensors (18) include at least one capacitive sensor (100) being a film-type capacitive sensor (100) and forming a capacity grid, disposed below the internal antenna (50).

11. The method of claim 10, wherein selectively switching between multiple antenna feed configurations comprises selectively switching between multiple antenna feeds (56) for the antenna (50).

12. The method of claim 11, wherein selectively switching between multiple antenna feed configurations further comprises selectively switching between multiple shorting elements (58) for the antenna (50).

13. The method of claim 10, wherein selectively switching between multiple antenna feed configurations comprises selectively switching between multiple shorting elements (58) for the antenna (50).

14. A circuit for adjusting the impedance of an antenna (50) in a mobile communication device (10) including a housing (40) and an internal antenna (50) placed adjacent an upper end of the backside (44) of the housing (40), comprising:
a plurality of position sensors (18), configured to be disposed on the backside (44) of the housing, to detect a position of a user's hand on said mobile communication device (10), the plurality of position sensors (18) forming an array of position sensors (18);
a controller (12) to dynamically adjust the impedance of the antenna (50) by selectively switching between multiple antenna feed configurations based on the user's hand position
wherein the plurality of position sensors (18) include at least one capacitive sensor (100) being a film-type capacitive sensor (100) and forming a capacity grid, disposed below the internal antenna (50).

15. The circuit of claim 14, wherein the antenna has multiple antenna (50) feeds (56) and wherein the controller (12) is configured to switch between multiple antenna configurations by selecting one of said multiple antenna feeds (56).

16. The circuit of claim 14, wherein the antenna (50) has multiple shorting elements (58) and wherein the controller (12) is configured to switch between multiple antenna configurations by selecting one of said multiple shorting elements (58).

17. A mobile communication device (10) comprising:
a housing (40);
a transmitter (32) and a receiver (34) within said housing (40);
an internal antenna (50) within said housing (40) coupled to said transmitter (32) and said receiver (34), said antenna (50) having a variable antenna feed configuration and said antenna being placed adjacent an upper end of the backside (44) of the housing (40);
a circuit according to any one of claims 14 to 16, its plurality of position sensors (18) being disposed on the backside (44) of the housing (40) to detect a position of a user's hand on said housing (40).

## Patentansprüche

1. Ein Verfahren eines Anpassens der Ursprungsimpedanz eines Senders (33) und/oder Empfängers (34) in einem Mobilkommunikationsgerät (10) enthaltend ein Gehäuse (40) und eine interne Antenne (50), platziert neben einem oberen Ende der Rückseite (44) des Gehäuses (40), umfassend:
Detektieren einer Position unter Verwendung einer Vielzahl von Positionssensoren (18), angeordnet an der Rückseite (44) des Gehäuses (40), von einer Hand eines Benutzers an dem Mobilkommunikationsgerät (10), wobei die Vielzahl der Positionssensoren (18) ein Array von Positionssensoren (18) bilden; und
dynamisches Anpassen der Ursprungsimpedanz von mindestens einem von dem Sender (32) und Empfänger (34) in dem Mobilkommunikationsgerät (10), basierend auf der Handposition des Benutzers,
wobei die Vielzahl der Positionssensoren (18) mindestens einen kapazitiven Sensor (100) enthalten, der ein kapazitiver Sensor eines Filmtyps (100) ist, und Bilden eines Kapazitätsgitters, angeordnet unter der internen Antenne (50).

2. Das Verfahren nach Anspruch 1, wobei ein dynamisches Anpassen der Ursprungsimpedanz des Senders (32) in dem Mobilkommunikationsgerät (10), basierend auf der Handposition des Benutzers, umfasst Bestimmen einer Schaltungskonfigurierung für eine Impedanzanpassungsschaltung (38), basierend auf der detektierten Handposition, und Erzeugen eines Steuersignals zum Rekonfigurieren der Impedanzanpassungsschaltung (38), basierend auf der vorbestimmten Schaltungskonfigurierung.

3. Das Verfahren nach Anspruch 2, ferner umfassend Speichern von Konfigurierungseinstellungen entsprechend einer Vielzahl von Schaltungskonfigurierungen in einer Nachschlagetabelle in einem Speicher (14).

4. Das Verfahren nach Anspruch 3, wobei ein Bestimmen einer Schaltungskonfigurierung für eine Impedanzanpassungsschaltung (38), basierend auf der detektierten Handposition, ein Verwenden umfasst der detektierten Handposition zum Auswählen einer Schaltungskonfigurierung.

5. Eine Schaltung zum Anpassen der Ursprungsimpedanz von mindestens einem von einem Sender (32) und einem Empfänger (34) in einem Mobilkommunikationsgerät (10), enthaltend ein Gehäuse (40) und eine interne Antenne (50), platziert neben einem oberen Ende der Rückseite (44) des Gehäuses (40), umfassend:
eine Vielzahl von Positionssensoren (18), konfiguriert, um an der Rückseite (44) des Gehäuses (40) angeordnet zu werden, zum Detektieren einer Position einer Hand eines Benutzers an dem Mobilkommunikationsgerät (10), wobei die Vielzahl der Positionssensoren (18) ein Array von Positionssensoren (18) bildet; und
einen Controller (12) zum dynamischen Anpassen der Ursprungsimpedanz von mindestens einem von dem Sender (32) und Empfänger (34), basierend auf der Handposition des Benutzers,
wobei die Vielzahl der Positionssensoren (18) mindestens einen kapazitiven Sensor (100) enthält, der ein kapazitiven Sensor (100) eines Filmtyps ist, und Bilden eines Kapazitätsgitters, angeordnet unter der internen Antenne (50).

6. Die Schaltung nach Anspruch 5, ferner umfassend eine Impedanzanpassungsschaltung (38), die mindestens einen von dem Sender (32) und Empfänger (34) koppelt mit einer Übertragungsantenne (50), wobei die Impedanzanpassungsschaltung (38) ein oder mehrere reaktive Elemente aufweist, die konfiguriert werden können zum Variieren der Ursprungsimpedanz des Senders (32) und/oder Empfängers (34).

7. Die Schaltung nach Anspruch 6, wobei eine Steuersignalausgabe durch den Controller (12) angeordnet ist zum Rekonfigurieren der Impedanzanpassungsschaltung (38) zum Variieren der Ursprungsimpedanz des Senders (32) und/oder Empfängers (34).

8. Die Schaltung nach Anspruch 7, ferner umfassend eine Nachschlagtabelle, die in dem Speicher (14) gespeichert ist, zum Speichern einer Vielzahl von Schaltungskonfigurierungen, wobei der Controller (12) betriebsfähig ist zum Auswählen einer Schaltungskonfigurierung von der Nachschlagtabelle, basierend auf der detektierten Handposition.

9. Ein Mobilkommunikationsgerät (10), umfassend:
ein Gehäuse (40) ;
einen Sender (32) und einen Empfänger (34) innerhalb des Gehäuses (40);
eine interne Antenne (50) innerhalb des Gehäuses (40), gekoppelt mit dem Sender (32) und dem Empfänger (34), wobei die interne Antenne (50) angrenzend an ein oberes Ende der Rückseite (44) des Gehäuses (40) platziert ist; und
eine Schaltung nach einem der Ansprüche 5 bis 8, wobei ihre Vielzahl von Positionssensoren (18) angeordnet ist auf der Rückseite (44) des Gehäuses (40) zum Detektieren einer Position einer Hand eines Benutzers an dem Gehäuse (40).

10. Ein Verfahren zum Anpassen der Antennenimpedanz eines Mobilkommunikationsgeräts (10), enthaltend ein Gehäuse (40) und eine interne Antenne (50), platziert angrenzend an ein oberes Ende der Rückseite (44) des Gehäuses (40), umfassend:
Detektieren einer Position unter Verwendung einer Vielzahl von Positionssensoren (18), angeordnet an der Rückseite des Gehäuses, von einer Hand eines Benutzers an dem Mobilkommunikationsgerät (10), wobei die Vielzahl der Positionssensoren (18) ein Array von Positionssensoren (18) bildet; und
dynamisches Anpassen der Impedanz von einer Antenne (50) für das Mobilkommunikationsgerät (10) durch selektives Auswählen zwischen mehreren Antennenzuführkonfigurierungen,
wobei die Vielzahl der Positionssensoren (18) mindestens einen kapazitiven Sensor (100) enthält, der ein kapazitiver Sensor (100) eines Filmtyps ist, und Bilden eines Kapazitätsgitters, angeordnet unter der internen Antenne (50).

11. Das Verfahren nach Anspruch 10, wobei selektives Umschalten zwischen mehreren Antennenzuführkonfigurierungen umfasst selektives Umschalten zwischen mehreren Antennenzuführungen (56) für die Antenne (50).

12. Das Verfahren nach Anspruch 11, wobei selektives Umschalten zwischen mehreren Antennenzuführkonfigurierungen ferner selektives Umschalten zwischen mehreren Kurzschlusselementen (56) für die Antenne (50) umfasst.

13. Das Verfahren nach Anspruch 10, wobei selektives Umschalten zwischen mehreren Antennenzuführkonfigurierungen selektives Umschalten zwischen mehreren Kurzschlusselementen (58) für die Antenne (50) umfasst.

14. Eine Schaltung zum Anpassen der Impedanz einer Antenne (50) in einem Mobilkommunikationsgerät (10), enthaltend ein Gehäuse (40) und eine interne Antenne (50), angrenzend platziert an einem oberen Ende der Rückseite (44) des Gehäuses (40), umfassend:
eine Vielzahl von Positionssensoren (18), konfiguriert, um an der Rückseite (44) des Gehäuses angebracht zu werden, zum Detektieren einer Position einer Hand eines Benutzers an dem Mobilkommunikationsgerät (10), wobei die Vielzahl der Positionssensoren (18) ein Array von Positionssensoren (18) bildet;
einen Controller (12) zum dynamischen Anpassen der Impedanz der Antenne (50) durch selektives Umschalten zwischen mehreren Antennenzuführkonfigurierungen, basierend auf der Handposition des Benutzers,
wobei die Vielzahl der Positionssensoren (18) mindestens einen kapazitiven Sensor (100) enthält, der ein kapazitiver Sensor (100) eines Filmtyps ist, und Bilden eines Kapazitätsgitters, angeordnet unter der internen Antenne (50).

15. Die Schaltung nach Anspruch 14, wobei die Antenne mehrere Antennen-(50)-Zuführungen (56) aufweist, und wobei der Controller (12) konfiguriert ist zum Umschalten zwischen mehreren Antennenkonfigurierungen durch Auswählen von einer der mehreren Antennenzuführungen (56).

16. Die Schaltung nach Anspruch 14, wobei die Antenne (50) mehrere Kurzschlusselemente (58) aufweist, und wobei der Controller (12) konfiguriert ist zum Schalten zwischen mehreren Antennenkonfigurierungen durch Auswählen von einem der mehreren Kurzschlusselementen (58).

17. Ein Mobilkommunikationsgerät (10), umfassend:
ein Gehäuse (40);
einen Sender (32) und einen Empfänger (34) innerhalb des Gehäuses (40);
eine interne Antenne (50) innerhalb des Gehäuses (40), gekoppelt mit dem Sender (32) und dem Empfänger (34), wobei die Antenne (50) eine variable Antennenzuführkonfigurierung aufweist, und die Antenne angrenzend an ein oberes Ende der Rückseite (44) des Gehäuses (40) platziert ist;
eine Schaltung nach einem der Ansprüche 14 bis 16, wobei ihre Vielzahl von Positionssensoren (18) angeordnet ist an der Rückseite (44) des Gehäuses (40) zum Detektieren einer Position einer Hand eines Benutzers an dem Gehäuse (40).

## Revendications

1. Procédé d'ajustement de l'impédance source d'un émetteur (32) et/ou d'un récepteur (34) dans un dispositif de communication mobile (10) comportant un boîtier (40) et une antenne interne (50) placée de manière adjacente à une extrémité supérieure de la face arrière (44) du boîtier (40), comprenant le fait de:
détecter une position d'une main d'un utilisateur sur le dispositif de communication mobile (10), en utilisant une pluralité de capteurs de position (18) disposés sur la face arrière (44) du boîtier (40), la pluralité de capteurs de position (18) formant un réseau de capteurs de position (18); et
ajuster de manière dynamique l'impédance source d'au moins l'un de l'émetteur (32) et du récepteur (34) dans le dispositif de communication mobile (10) sur la base de la position de la main de l'utilisateur,
où la pluralité de capteurs de position (18) comportent au moins un capteur capacitif (100) qui est un capteur capacitif (100) de type film et qui forme une grille de capacités, disposé sous l'antenne interne (50).

2. Procédé de la revendication 1, dans lequel l'ajustement dynamique de l'impédance source de l'émetteur (32) dans le dispositif de communication mobile (10) sur la base de la position de la main de l'utilisateur comprend le fait de déterminer une configuration de circuit pour un circuit (38) d'adaptation d'impédance sur la base de ladite position détectée de la main, et de générer un signal de commande pour reconfigurer le circuit (38) d'adaptation d'impédance sur la base de la configuration de circuit déterminée.

3. Procédé de la revendication 2, comprenant en plus le fait de stocker des paramètres de configuration correspondant à une pluralité de configurations de circuit dans une table de conversion dans une mémoire (14).

4. Procédé de la revendication 3, dans lequel le fait de déterminer une configuration de circuit pour un circuit (38) d'adaptation d'impédance sur la base de ladite position détectée de la main comprend l'utilisation de ladite position détectée de la main pour sélectionner une configuration de circuit.

5. Circuit pour ajuster l'impédance source d'au moins l'un d'un émetteur (32) et d'un récepteur (34) dans un dispositif de communication mobile (10) comportant un boîtier (40) et une antenne interne (50) placée de manière adjacente à une extrémité supérieure de la face arrière (44) du boîtier (40), comprenant:
une pluralité de capteurs de position (18), configurés de manière à être disposés sur la face arrière (44) du boîtier (40), pour détecter une position d'une main d'un utilisateur sur ledit dispositif de communication mobile (10), la pluralité de capteurs de position (18) formant un réseau de capteurs de position (18); et
une unité de commande (12) pour ajuster de manière dynamique l'impédance source d'au moins l'un dudit émetteur (32) et dudit récepteur (34) sur la base de la position de la main de l'utilisateur,
où la pluralité de capteurs de position (18) comportent au moins un capteur capacitif (100) qui est un capteur capacitif (100) du type film et qui forme une grille de capacités, disposé sous l'antenne interne (50).

6. Circuit de la revendication 5, comprenant en plus un circuit (38) d'adaptation d'impédance couplant au moins l'un dudit émetteur (32) et dudit récepteur (34) à une antenne d'émission (50), ledit circuit (38) d'adaptation d'impédance ayant un ou plusieurs éléments réactifs qui peuvent être reconfigurés pour faire varier l'impédance source de l'émetteur (32) et/ou du récepteur (34).

7. Circuit de la revendication 6, dans lequel un signal de commande délivré en sortie par ladite unité de commande (12) est agencé pour reconfigurer le circuit (38) d'adaptation d'impédance pour faire varier l'impédance source de l'émetteur (32) et/ou du récepteur (34).

8. Circuit de la revendication 7, comprenant en plus une table de conversion stockée dans une mémoire (14) pour stocker une pluralité de configurations de circuit, où l'unité de commande (12) fonctionne pour sélectionner une configuration de circuit d'après ladite table de conversion sur la base de ladite position détectée de la main.

9. Dispositif de communication mobile (10) comprenant:
un boîtier (40);
un émetteur (32) et un récepteur (34) dans ledit boîtier (40);
une antenne interne (50) dans ledit boîtier (40) couplée audit émetteur (32) et audit récepteur (34), l'antenne interne (50) étant placée de manière adjacente à une extrémité supérieure de la face arrière (44) du boîtier (40); et
un circuit selon l'une quelconque des revendication 5 à 8, avec sa pluralité de capteurs de position (18) disposés sur la face arrière (44) du boîtier (40) pour détecter une position d'une main d'un utilisateur sur ledit boîtier (40).

10. Procédé d'ajustement de l'impédance d'une antenne d'un dispositif de communication mobile (10), comportant un boîtier (40) et une antenne interne (50) placée de manière adjacente à une extrémité supérieure de la face arrière (44) du boîtier (40), comprenant les étapes de:
détecter une position d'une main d'un utilisateur sur le dispositif de communication mobile (10), en utilisant une pluralité de capteurs de position (18) disposés sur la face arrière du boîtier, la pluralité de capteurs de position (18) formant un réseau de capteurs de position (18); et
ajuster de manière dynamique l'impédance d'une antenne (50) pour le dispositif de communication mobile (10) en basculant de manière sélective entre plusieurs configurations de sources d'antenne,
où la pluralité de capteurs de position (18) comportent au moins un capteur capacitif (100) qui est un capteur capacitif (100) du type film et qui forme une grille de capacités, disposé sous l'antenne interne (50).

11. Procédé de la revendication 10, dans lequel le fait de basculer sélectivement entre plusieurs configurations de sources d'antenne comprend le fait de basculer de manière sélective entre plusieurs sources d'antenne (56) pour l'antenne (50).

12. Procédé de la revendication 11, dans lequel le fait de basculer sélectivement entre plusieurs configurations de sources d'antenne comprend en plus le fait de basculer de manière sélective entre plusieurs éléments de court-circuitage (58) pour l'antenne (50).

13. Procédé de la revendication 10, dans lequel le fait de basculer sélectivement entre plusieurs configurations de sources d'antenne comprend le fait de basculer de manière sélective entre plusieurs éléments de court-circuitage (58) pour l'antenne (50).

14. Circuit pour ajuster l'impédance d'une antenne (50) dans un dispositif de communication mobile (10) comprenant un boîtier (40) et une antenne interne (50) placée de manière adjacente à une extrémité supérieure de la face arrière (44) du boîtier (40), comprenant:
une pluralité de capteurs de position (18), configurés pour être disposés sur la face arrière (44) du boîtier, pour détecter une position d'une main d'un utilisateur sur ledit dispositif de communication mobile (10), la pluralité de capteurs de position (18) formant un réseau de capteurs de position (18);
une unité de commande (12) pour ajuster de manière dynamique l'impédance de l'antenne (50) en basculant de manière sélective entre plusieurs configurations de sources d'antenne sur la base de la position de la main de l'utilisateur
où la pluralité de capteurs de position (18) comportent au moins un capteur capacitif (100) qui est un capteur capacitif (100) du type film et qui forme une grille de capacités, disposé sous l'antenne interne (50).

15. Circuit de la revendication 14, dans lequel l'antenne a plusieurs sources (56) d'antenne (50) et dans lequel l'unité de commande (12) est configurée pour basculer entre plusieurs configurations d'antenne en sélectionnant l'une desdites sources d'antenne (56) multiples.

16. Circuit de la revendication 14, dans lequel l'antenne (50) a plusieurs éléments de court-circuitage (58) et dans lequel l'unité de commande (12) est configurée pour basculer entre plusieurs configurations d'antenne en sélectionnant l'un desdits plusieurs éléments de court-circuitage (58).

17. Dispositif de communication mobile (10) comprenant:
un boîtier (40);
un émetteur (32) et un récepteur (34) dans ledit boîtier (40);
une antenne interne (50) dans ledit boîtier (40) couplée audit émetteur (32) et audit récepteur (34), ladite antenne (50) ayant une configuration de sources d'antenne variable et ladite antenne étant placée de manière adjacente à une extrémité supérieure de la face arrière (44) du boîtier (40);
un circuit selon l'une quelconque des revendications 14 à 16, sa pluralité de capteurs de position (40) étant disposés sur la face arrière (44) du boîtier (40) pour détecter une position d'une main d'un utilisateur sur ledit boîtier (40).
